(19) Europäisches Patentamt
European Patent Office
Office européen des brevets

(11) **EP 4 693 589 A1**

(12) **EUROPEAN PATENT APPLICATION**
published in accordance with Art. 153(4) EPC

(43) Date of publication:
**11.02.2026 Bulletin 2026/07**

(21) Application number: **23929872.2**

(22) Date of filing: **09.10.2023**

(51) International Patent Classification (IPC):
*H01M 10/42* (2006.01)    *H01M 10/0525* (2010.01)
*H01M 10/0567* (2010.01)

(52) Cooperative Patent Classification (CPC):
Y02E 60/10

(86) International application number:
**PCT/CN2023/123493**

(87) International publication number:
**WO 2024/198298 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023   CN 202310340241**

(71) Applicant: **Ningde Amperex Technology Limited
Ningde, Fujian 352100 (CN)**

(72) Inventor: **TANG, Xuqing
Ningde, Fujian 352100 (CN)**

(74) Representative: **Kraus & Lederer PartGmbB
Thomas-Wimmer-Ring 15
80539 München (DE)**

(54) **SECONDARY BATTERY AND ELECTRICAL APPARATUS**

(57)    This application provides a secondary battery and an electric apparatus. The secondary battery includes a positive electrode plate, a negative electrode plate, a separator, and an electrolyte. The positive electrode plate includes a positive electrode current collector, and a positive electrode active material layer and an inorganic coating are provided on a surface of the positive electrode current collector. The electrolyte includes an additive, and the additive includes at least one of lithium difluorophosphate, succinonitrile, adiponitrile, 1,3,6-hexanetricarbonitrile, or 1,2,3-tris(2-oxyethoxy)propane. A mass per unit area of the inorganic coating is A $g/m^2$, and based on a mass of the electrolyte, a mass percentage of the additive is B%, satisfying $0.01 \leq B/A \leq 5$. Selection of the foregoing additives and control of B/A within the foregoing range are conducive to improving high-temperature safety performance of the secondary battery at high voltage.

EP 4 693 589 A1

## Description

This application claims priority to Chinese Patent Application No. 202310340241.X, filed with the China National Intellectual Property Administration on March 31, 2023 and entitled "SECONDARY BATTERY AND ELECTRIC APPARATUS", which is incorporated herein by reference in its entirety.

## TECHNICAL FIELD

This application relates to the field of energy storage technologies, and in particular, to a secondary battery and an electric apparatus.

## BACKGROUND

In recent years, secondary batteries (for example, lithium-ion batteries) have been widely used in the fields of smartphones, tablet computers, smart wearable devices, electric tools, and electric vehicles.

With the wide use of secondary batteries, the market imposes increasingly high requirements for energy density and use environment of secondary batteries. For example, the secondary batteries are required to have good high-temperature safety performance at high voltage (for example, voltage greater than or equal to 4.7 V). Therefore, how high-temperature safety performance of secondary batteries at high voltage is improved has become an urgent problem to be solved.

## SUMMARY

This application is intended to provide a secondary battery and an electric apparatus, so as to improve high-temperature safety performance of the secondary battery at high voltage.

Specific technical solutions are as follows:

A first aspect of this application provides a secondary battery including a positive electrode plate, a negative electrode plate, a separator, and an electrolyte, where the positive electrode plate includes a positive electrode current collector, and a positive electrode active material layer and an inorganic coating are provided on a surface of the positive electrode current collector; the electrolyte includes an additive, and the additive includes at least one of lithium difluorophosphate, succinonitrile, adiponitrile, 1,3,6-hexanetricarbonitrile, or 1,2,3-tris(2-oxyethoxy)propane; and a mass per unit area of the inorganic coating is A g/m², and based on a mass of the electrolyte, a mass percentage of the additive is B%, satisfying $0.01 \leq B/A \leq 5$. Use of the foregoing positive electrode plate structure, cooperative selection of the foregoing electrolyte additives, and cooperative control of B/A within the foregoing range are conducive to reducing side reactions between the positive electrode plate and the electrolyte, thereby improving high-temperature safety performance of the secondary battery. They are also conducive to improving film formation quality of cathode electrolyte interface (CEI) film and solid electrolyte interface (SEI) film, and improving infiltration performance and flame retardancy of the electrolyte, thereby improving thermal stability and anti-overcharge performance of the secondary battery. In addition, they are conducive to improving the protective effect of the inorganic coating on the positive electrode plate, and reducing the risk of short circuit of the secondary battery, thereby improving the high-temperature safety performance of the secondary battery at high voltage.

In some embodiments of this application, $1 \leq A \leq 20$, and this is conducive to reducing the risk of short circuit of the secondary battery and can reduce energy density loss of the secondary battery.

In some embodiments of this application, $0.01 \leq B \leq 10$, and this is conducive to improving the thermal stability and anti-overcharge performance of the secondary battery and can reduce kinetic loss of the secondary battery.

In some embodiments of this application, along a length direction of the positive electrode plate, the inorganic coating is disposed on at least one surface of the current collector, and a length of the inorganic coating is W mm, where $5 \leq W \leq 300$. The length of the inorganic coating disposed on at least one surface of the current collector being W mm can further improve the protective effect on the positive electrode plate, and reduce the risk of short circuit of the secondary battery, thereby improving the high-temperature safety performance of the secondary battery at high voltage.

In some embodiments of this application, along a length direction of the positive electrode plate, the inorganic coating is disposed on two surfaces of the current collector, a length of the inorganic coating on one surface of the current collector being W1 mm, and a length of the inorganic coating on the other surface of the current collector being W2 mm, where $5 \leq W1 \leq 35$ and $30 \leq W2 \leq 300$. The inorganic coatings with lengths of W1 mm and W2 mm being disposed on two surfaces of the current collector can further improve the protective effect on the positive electrode plate, and reduce the risk of short circuit of the secondary battery, thereby improving the high-temperature safety performance of the secondary battery at high voltage.

In some embodiments of this application, along a thickness direction of the positive electrode plate, a thickness of the inorganic coating is H $\mu$m, where $1 \leq H \leq 20$, and this is conducive to improving the protective effect of the inorganic coating on the positive electrode plate, thereby improving the high-temperature safety performance of the secondary battery at high voltage.

In some embodiments of this application, a percentage of a length of the inorganic coating in a total length of the positive electrode plate is 0.1% to 20%, and this is conducive to improving the protective effect of the inorganic coating on the positive electrode plate, and reducing the risk of short circuit of the secondary battery, thereby improving the high-temperature safety performance of the secondary battery at high voltage.

In some embodiments of this application, the inorganic coating includes an inorganic substance and a binder, where based on mass of the inorganic coating, a mass percentage of the inorganic substance is 70% to 80% and a mass percentage of the binder is 20% to 30%; the inorganic substance includes at least one of aluminum oxide, magnesium oxide, calcium oxide, magnesium hydroxide, boehmite, or zirconium oxide; and the binder includes at least one of polyvinylidene fluoride, polypropylene, or polyacrylate. This is conducive to enhancing interface adhesion performance between the inorganic coating and the positive electrode current collector, thereby improving the high-temperature safety performance of the secondary battery at high voltage.

In some embodiments of this application, $D_v99$ of the inorganic substance is 0.5 $\mu$m to 2 $\mu$m, and this is conducive to improving mixing uniformity of the inorganic substance and the binder and enhancing the interface adhesion performance between the inorganic coating and the positive electrode current collector, thereby improving the high-temperature safety performance of the secondary battery at high voltage.

In some embodiments of this application, the secondary battery satisfies at least one of the following conditions:

(1) along a length direction of the positive electrode plate, a length of the inorganic coating is W mm, where $40 \leq W \leq 160$; or

(2) along a thickness direction of the positive electrode plate, a thickness of the inorganic coating is H $\mu$m, where $3 \leq H \leq 14$.

W and H being controlled within the foregoing ranges is conducive to further improving the protective effect of the inorganic coating on the positive electrode plate, thereby further improving the high-temperature safety performance of the secondary battery at high voltage.

In some embodiments of this application, the secondary battery satisfies at least one of the following conditions:

$$(1)\ 2 \leq A \leq 14;$$

$$(2)\ 0.02 \leq B \leq 7.5;$$

or

$$(3)\ 0.2 \leq B/A \leq 3.$$

A, B, and B/A being controlled within the foregoing ranges is conducive to further improving the protective effect of the inorganic coating on the positive electrode plate, reducing the risk of short circuit of the secondary battery, and obtaining more uniform CEI film and SEI film, so as to ensure transport of lithium ions in the lithium-ion battery and reduce impedance, thereby further improving the high-temperature safety performance of the secondary battery at high voltage.

A second aspect of this application provides an electric apparatus including the secondary battery according to any one of the foregoing embodiments. The secondary battery provided in this application has good high-temperature safety performance at high voltage, so the electric apparatus obtained has good high-temperature safety performance at high voltage.

This application provides a secondary battery and an electric apparatus. In the secondary battery, a positive electrode active material layer and an inorganic coating are provided on a surface of a positive electrode current collector of a positive electrode plate; the electrolyte of this application includes an additive, and the additive includes at least one of lithium difluorophosphate, succinonitrile, adiponitrile, 1,3,6-hexanetricarbonitrile, or 1,2,3-tris(2-oxyethoxy)propane; and a mass per unit area of the inorganic coating is A g/m$^2$, and based on a mass of the electrolyte, a mass percentage of the additive is B%, satisfying $0.01 \leq B/A \leq 5$. In this application, use of the foregoing positive electrode plate structure, cooperative selection of the foregoing electrolyte additives, and cooperative control of B/A within the foregoing range are conducive to reducing side reactions between the positive electrode plate and the electrolyte, reducing overflow of the inorganic substance, and alleviating warping and deformation of the secondary battery, thereby improving the high-temperature safety performance of the secondary battery. They are also conducive to improving the film formation quality of the CEI film and the SEI film, and improving the infiltration performance and flame retardancy of the electrolyte, so as to reduce redox decomposition of the electrolyte at positive and negative electrode interfaces, improve transport of lithium ions, and reduce the impedance, thereby improving the thermal stability and anti-overcharge performance of the secondary battery. In addition, they are conducive to improving the protective effect of the inorganic coating on the positive electrode plate, and reducing the risk of short circuit of the secondary battery, thereby improving the high-temperature safety performance of the secondary battery at high voltage.

Certainly, when any one of the products or methods of this application is implemented, the advantages described above are not necessarily demonstrated all at the same time.

## DETAILED DESCRIPTION

To make the objectives, technical solutions, and advantages of this application more comprehensible, the following further describes this application in detail with reference to embodiments. Apparently, the described embodiments are only some but not all of these embodiments of this application. All other embodiments obtained by persons skilled in the art based on this application shall fall within the protection scope of this application.

It should be noted that in the content of this application, an example in which a lithium-ion battery is used as a secondary battery is used to illustrate this application. However, the secondary battery of this application is not limited to the lithium-ion battery.

The inventors have found that the current lithium-ion batteries are prone to the risk of thermal runaway when used in extreme environments such as continuous high temperature. A possible reason is that at high temperature and high pressure (for example, temperature above 85°C and voltage above 4.48 V), the electrolyte is prone to redox decomposition reactions with the positive electrode plate to destroy the CEI film on the surface of the positive electrode plate, resulting in continuously increased impedance of the lithium-ion battery and causing short circuit of the lithium-ion battery due to local deformation and warping.

In view of this, a first aspect of this application provides a secondary battery including a positive electrode plate, a negative electrode plate, a separator, and an electrolyte. The positive electrode plate includes a positive electrode current collector, and a positive electrode active material layer and an inorganic coating are provided on a surface of the positive electrode current collector. The electrolyte includes an additive, and the additive includes at least one of lithium difluorophosphate, succinonitrile, adiponitrile, 1,3,6-hexanetricarbonitrile, or 1,2,3-tris(2-oxyethoxy)propane. A mass per unit area of the inorganic coating is $A\,g/m^2$, and based on a mass of the electrolyte, a mass percentage of the additive is B%, satisfying $0.01 \leq B/A \leq 5$. In an embodiment of this application, $0.2 \leq B/A \leq 3$. In this application, use of the foregoing positive electrode plate structure, cooperative selection of the foregoing electrolyte additives, and cooperative control of B/A within the foregoing range are conducive to reducing side reactions between the positive electrode plate and the electrolyte, thereby improving high-temperature safety performance of the secondary battery. They are also conducive to improving film formation quality of CEI film and SEI film, and improving infiltration performance and flame retardancy of the electrolyte, thereby improving thermal stability and anti-overcharge performance of the secondary battery. In addition, they are conducive to improving the protective effect of the inorganic coating on the positive electrode plate, and reducing the risk of short circuit of the secondary battery, thereby improving the high-temperature safety performance of the secondary battery at high voltage.

In some embodiments of this application, $1 \leq A \leq 20$. In another embodiment of this application, $2 \leq A \leq 14$. In another embodiment of this application, $2 \leq A \leq 8$. For example, A may be $1\,g/m^2$, $3.1\,g/m^2$, $5.2\,g/m^2$, $7.6\,g/m^2$, $10\,g/m^2$, $14.5\,g/m^2$, $20\,g/m^2$, or a value within a range defined by any two of these values. A being controlled within the foregoing range is conducive to improving the protective effect of the inorganic coating on the positive electrode plate, and reducing the risk of short circuit of the secondary battery, and can reduce energy density loss of the secondary battery.

In some embodiments of this application, $0.01 \leq B \leq 10$. In another embodiment of this application, $0.02 \leq B \leq 7.5$. In another embodiment of this application, $0.02 \leq B \leq 6$. For example, B may be 0.01, 1.2, 2.4, 3.6, 4.7, 7.3, 8.5, 10, or a value within a range defined by any two of these values. B being controlled within the foregoing range is conducive to improving the thermal stability and anti-overcharge performance of the secondary battery and can reduce kinetic loss of the secondary battery.

In some embodiments of this application, a percentage of a length of the inorganic coating in a total length of the positive electrode plate is 0.1% to 20%. In another embodiment of this application, a percentage of the length of the inorganic coating in the total length of the positive electrode plate is 0.1% to 10%. In another embodiment of this application, a percentage of the length of the inorganic coating in the total length of the positive electrode plate is 1% to 15%. For example, the percentage of the length of the inorganic coating in the total length of the positive electrode plate may be 0.1%, 1%, 1.5%, 3%, 5%, 7%, 13%, 16%, 20%, or a value within a range defined by any two of these values. The percentage of the length of the inorganic coating in the total length of the positive electrode plate being controlled is conducive to improving the protective effect of the inorganic coating on the positive electrode plate, and reducing the risk of short circuit of the secondary battery, thereby improving the high-temperature safety performance of the secondary battery at high voltage. The length of the inorganic coating can be correspondingly adjusted according to overall size of an electrode assembly. In other words, when the overall size of the electrode assembly is small, the total length of the positive electrode plate contained therein is short, and the length of the inorganic coating is short; and when the overall size of the electrode assembly is large, the length of the positive electrode plate contained therein is long, and the length of the inorganic coating is long.

In some embodiments of this application, along a length direction of the positive electrode plate, the inorganic coating is disposed on at least one surface of the current collector, and a length of the inorganic coating is W mm, where $5 \leq W \leq 300$. In some embodiments of this application, $5 \leq W \leq 160$. In some embodiments of this application, $40 \leq W \leq 160$. In some embodiments of this application, $120 \leq W \leq 300$. For example, W may be 5, 25, 55, 120, 140, 180, 220, 255, 270, 300, or a value within a range defined by any two of these values. The length of the inorganic coating disposed on at least one surface of the current collector being W mm can further improve the protective effect on the positive electrode plate, and reduce the risk of short circuit of the secondary battery, thereby improving the high-temperature safety performance of the secondary battery at high voltage.

In some embodiments of this application, along a length direction of the positive electrode plate, the inorganic coating is disposed on two surfaces of the current collector, a length of the inorganic coating on one surface of the current collector being W1 mm, and a length of the inorganic coating on the other surface of the current collector being W2 mm, where $5 \leq W1 \leq 35$ and $30 \leq W2 \leq 300$. In some embodiments of this application, $5 \leq W1 \leq 35$ and $30 \leq W2 \leq 150$. In some embodiments of this application, $5 \leq W1 \leq 35$ and $120 \leq W2 \leq 300$. The inorganic coatings with lengths of W1 mm and W2 mm being disposed on two surfaces of the current collector can significantly improve the protective effect on the positive electrode plate, and reduce the risk of short circuit of the secondary battery, thereby improving the high-temperature safety performance of the secondary battery at high voltage.

In some embodiments of this application, along a thickness direction of the positive electrode plate, a thickness of the inorganic coating is H $\mu$m, where $1 \leq H \leq 20$. In another embodiment of this application, $3 \leq H \leq 14$. In another embodiment of this application, $3 \leq H \leq 9$. For example, H may be 1, 3, 5, 7, 11, 15, 17, 20, or a value within a range defined by any two of these values. H being controlled within the foregoing range is conducive to improving the protective effect of the inorganic coating on the positive electrode plate, and reducing the risk of short circuit of the secondary battery, thereby improving the high-temperature safety performance of the secondary battery at high voltage. In some embodiments of this application, the inorganic coating is provided on two surfaces of the positive electrode current collector, and the thickness of the inorganic coating may be the thickness of the inorganic coating on either surface of the positive electrode current collector.

In some embodiments of this application, the inorganic coating includes an inorganic substance and a binder, where based on mass of the inorganic coating, a mass percentage of the inorganic substance is 70% to 80% and a mass percentage of the binder is 20% to 30%; the inorganic substance includes at least one of aluminum oxide, magnesium oxide, calcium oxide, magnesium hydroxide, boehmite, or zirconium oxide; and the binder includes at least one of polyvinylidene fluoride, polypropylene, or polyacrylate. The mass percentages and types of the inorganic substance and the binder being controlled within the ranges in this application is conducive to enhancing interface adhesion performance between the inorganic coating and the positive electrode current collector, thereby improving the high-temperature safety performance of the secondary battery at high voltage.

In some embodiments of this application, $D_v99$ of the inorganic substance is 0.5 $\mu$m to 2 $\mu$m. $D_v99$ of the inorganic substance being controlled within the range in this application during preparation of the inorganic coating is conducive to improving mixing uniformity of the inorganic substance and the binder and enhancing the interface adhesion performance between the inorganic coating and the positive electrode current collector, thereby improving the high-temperature safety performance of the secondary battery at high voltage. In this application, $D_v99$ is a particle size value where the cumulative distribution by volume reaches 99% as counted from the small particle size side.

The secondary battery of this application is not particularly limited, and may include an apparatus in which electrochemical reactions take place. For example, the secondary battery may include but is not limited to a lithium-ion secondary battery or a sodium-ion secondary battery.

The positive electrode current collector is not particularly limited in this application, provided that the objectives of this application can be achieved. For example, the positive electrode current collector may include aluminum foil, aluminum alloy foil, or the like. The positive electrode active material layer of this application includes a positive electrode active material. The positive electrode active material includes lithium and at least one transition metal. For example, the positive electrode active material may include a lithium transition metal composite oxide and a lithium-containing transition metal phosphate compound, where the lithium transition metal composite oxide may include but is not limited to at least one of $LiCoO_2$, $LiMn_2O_4$, $LiNi_{0.5}Mn_{0.5}O_2$, $LiNi_{0.05}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, or $LiMn_{1.5}Ni_{0.5}O_4$, and the lithium-containing transition metal phosphate compound may include but is not limited to at least one of $LiFePO_4$, $Li_3Fe_2(PO_4)_3$, $LiFeP_2O_7$, or $LiCoPO_4$. In this application, thicknesses of the positive electrode current collector and the positive electrode active material layer are not particularly limited, provided that the objectives of this application can be achieved. For example, the thickness of the positive electrode current collector is 5 μm to 20 μm. The thickness of the one-sided positive electrode active material layer is 30 μm to 120 μm. The thickness of the inorganic coating is less than or equal to the thickness of the positive electrode active material layer. The positive electrode active material layer of this application may further include a conductive agent and a binder.

The negative electrode plate is not particularly limited in this application, provided that the objectives of this application can be achieved. For example, the negative electrode plate includes a negative electrode current collector and a negative electrode active material layer disposed on at least one surface of the negative electrode current collector. The negative electrode current collector is not particularly limited in this application, provided that the objectives of this application can be achieved. For example, the negative electrode current collector may include copper foil, copper alloy foil, nickel foil, titanium foil, nickel foam, copper foam, or the like. The negative electrode active material layer of this application includes a negative electrode active material. Type of the negative electrode active material is not particularly limited in this application, provided that the objectives of this application can be achieved. For example, the negative electrode active material may include at least one of natural graphite, artificial graphite, mesocarbon microbeads (MCMB), hard carbon, soft carbon, silicon, a silicon-carbon composite, $SiO_x$ ($0 < x \le 2$), or metal lithium. In this application, thicknesses of the negative electrode current collector and the negative electrode active material layer are not particularly limited, provided that the objectives of this application can be achieved. For example, the thickness of the negative electrode current collector is 4 μm to 12 μm, and the thickness of the one-sided negative electrode active material layer is 30 μm to 130 μm. In this application, the negative electrode active material layer may be disposed on one or two surfaces of the negative electrode current collector along a thickness direction of the negative electrode current collector. It should be noted that the "surface" herein may be an entire region or a partial region of the negative electrode current collector. This is not particularly limited in this application, provided that the objectives of this application can be achieved.

The negative electrode active material layer of this application may further include a conductive agent and a binder. The conductive agent and the binder are not particularly limited in this application, provided that the objectives of this application can be achieved. For example, the conductive agent may include at least one of acetylene black, amorphous carbon, conductive carbon black (Super P), carbon nanotubes (CNTs), carbon fiber, flake graphite, carbon dots, or graphene. The binder may include at least one of polypropylene alcohol, sodium polyacrylate, potassium polyacrylate, lithium polyacrylate, polyimide, polyamideimide, styrene-butadiene rubber (SBR), polyvinyl alcohol (PVA), polyvinylidene fluoride (PVDF), polytetrafluoroethylene (PTFE), polyvinyl butyral (PVB), water-borne acrylic resin, carboxymethyl cellulose (CMC), or sodium carboxymethyl cellulose (CMC-Na).

The negative electrode plate of this application may further include a primer layer, where the primer layer is located between the negative electrode current collector and the negative electrode active material layer and disposed on at least a portion of a surface of the negative electrode current collector. The primer layer includes a conductive agent and a binder, where the conductive agent includes at least one of carbon fiber, Ketjen black, acetylene black, carbon nanotubes, or graphene; and the binder includes at least one of polyvinylidene fluoride, vinylidene fluoride-hexafluoropropylene copolymer, polyamide, polyacrylonitrile, polyacrylic ester, polyacrylic acid, polyacrylic salt, sodium carboxymethyl cellulose, polyvinylpyrrolidone, polyvinyl ether, polymethyl methacrylate, polytetrafluoroethylene, polyhexafluoropropylene, styrene-butadiene rubber, acrylate, or epoxy resin. In this application, a thickness of the primer layer is 0.1 μm to 2.0 μm. The primer layer of an appropriate thickness can conduct electrons and enhance adhesion between the active substance layer and the current collector to reduce peeling of the active substance layer during cycling, thereby making the secondary battery tend to have decreased charge transfer impedance and improved kinetics and improving the high-temperature safety performance of the secondary battery at high voltage.

The separator is not particularly limited in this application, provided that the objectives of this application can be achieved. For example, the separator may include a substrate layer and a surface treatment layer. The substrate layer may be a non-woven fabric, film, or composite film having a porous structure, and material of the substrate layer may include at least one of polyethylene, polypropylene, polyethylene glycol terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is disposed on at least one surface of the substrate layer, and the surface treatment layer may be a polymer layer, an inorganic substance layer, or a layer formed by mixing a polymer and an inorganic substance. For example, the inorganic substance layer includes inorganic particles and a binder. The inorganic particle is not particularly limited, and for example, may be selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited, and for example, may be selected from at least one of polyvinylidene fluoride, polyvinylidene fluoride-hexafluoropropylene, polytetrafluoroethylene, polyhexafluoropropylene, polyamide, polyacrylonitrile, polyacrylic ester, polyacrylic acid, sodium polyacrylate, potassium polyacrylate, lithium polyacrylate, polyvinylpyrrolidone, polyvinyl ether, or polymethyl methacrylate. The polymer layer includes a polymer, and material of the polymer includes at least one of polyamide, polyacrylonitrile, acrylate polymer, polyacrylic acid, sodium polyacrylate, potassium polyacrylate, lithium polyacrylate, polyvinylpyrrolidone, polyvinyl ether, polyvinylidene fluoride, or polyvinylidene fluoride-hexafluoropropylene. In this application, a thickness of the separator is not particularly limited, provided that the objectives of this application can be achieved. For example, the thickness of the separator may be 5 $\mu$m to 50 $\mu$m.

In this application, the electrolyte may further include other additives. The other additives include at least one of 1,3-propane sultone, glutaronitrile, or lithium tetrafluoroborate, and based on the mass of the electrolyte, a mass percentage of the other additives is 0.01% to 20%.

In this application, the electrolyte further includes an organic solvent and a lithium salt, and based on the mass of the electrolyte, a mass percentage of the organic solvent is 60% to 90% and a mass percentage of the lithium salt is 8% to 15%. Types of the organic solvent and the lithium salt are not particularly limited in this application, provided that the objectives of this application can be achieved. For example, the organic solvent may include but is not limited to at least one of a carbonate compound, a carboxylate compound, an ether compound, or other organic solvents. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), methyl n-propyl carbonate, ethyl n-propyl carbonate, or di-n-propyl carbonate. The cyclic carbonate compound may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1-difluoroethylene carbonate, 1,1,2-trifluoroethylene carbonate, 1,1,2,2-tetrafluoroethylene carbonate, fluoro-2-methylethylene carbonate, fluoro-methylethylene carbonate, 1,2-difluoro-methylethylene carbonate, 1,1,2-trifluoro-2-methylethylene carbonate, trifluoromethylethylene carbonate, bis(fluoromethyl) carbonate, bis(difluoromethyl) carbonate, bis(trifluoromethyl) carbonate, bis(2-fluoroethyl) carbonate, bis(2,2-difluoroethyl) carbonate, bis(2,2,2-trifluoroethyl) carbonate, 2-fluoroethyl methyl carbonate, 2,2-difluoroethyl methyl carbonate, or 2,2,2-trifluoroethyl methyl carbonate. The carboxylate compound may include but is not limited to at least one of a linear carboxylate compound or a fluorocarboxylate compound. The linear carboxylate compound may include but is not limited to at least one of methyl acetate, ethyl acetate, propyl acetate, isopropyl acetate, butyl acetate, sec-butyl acetate, isobutyl acetate, tert-butyl acetate, methyl propionate, ethyl propionate, propyl propionate (PP), isopropyl propionate, methyl butyrate, ethyl butyrate, propyl butyrate, methyl isobutyrate, ethyl isobutyrate, methyl valerate, ethyl valerate, methyl pivalate, or ethyl pivalate. The fluorocarboxylate compound may include but is not limited to at least one of methyl trifluoroacetate, ethyl trifluoroacetate, propyl trifluoroacetate, butyl trifluoroacetate, or 2,2,2-trifluoroethyl trifluoroacetate. The ether compound may include but is not limited to at least one of linear ether or cyclic ether. The linear ether may include but is not limited to at least one of dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, or 1,2-ethoxymethoxyethane. The cyclic ether may include but is not limited to at least one of tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, or dimethoxypropane. The other organic solvents may include but are not limited to at least one of a phosphorus-containing organic solvent, a sulfur-containing organic solvent, or an aromatic fluorine-containing solvent. The phosphorus-containing organic solvent may include but is not limited to at least one of trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, or tris (2,2,3,3,3-pentafluoropropyl) phosphate. The sulfur-containing organic solvent may include but is not limited to at least one of sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, or dibutyl sulfate. The aromatic fluorine-containing solvent may include but is not limited to at least one of fluorobenzene, difluorobenzene, trifluorobenzene, tetrafluorobenzene, pentafluorobenzene, hexafluorobenzene, or trifluoromethylbenzene. For example, the lithium salt may include but is not limited to at least one of LiTFSI, $LiPF_6$, $LiBF_4$, $LiAsF_6$, $LiClO_4$, $LiB(C_6H_5)_4$, $LiCH_3SO_3$, $LiCF_3SO_3$, $LiC(SO_2CF_3)_3$, $Li_2SiF_6$, lithium bis(oxalato)borate (LiBOB), or lithium difluoroborate.

A preparation process of the secondary battery of this application is well known to persons skilled in the art, and is not particularly limited in this application. For example, the preparation process may include but is not limited to the following steps: stacking a positive electrode plate, a separator, and a negative electrode plate in sequence, performing operations such as winding and folding as needed to obtain an electrode assembly with a winding structure, putting the electrode assembly into a packaging bag, injecting an electrolyte into the packaging bag, and sealing the packaging bag to obtain a secondary battery. In addition, an overcurrent prevention element, a guide plate, and the like may also be placed into the packaging bag as needed, so as to prevent pressure increase, overcharge, and overdischarge inside the secondary battery. The packaging bag is a packaging bag known in the art, and is not limited in this application.

A second aspect of this application provides an electric apparatus including the secondary battery according to the foregoing embodiments. The electric apparatus is not particularly limited in this application and can be a well-known electric apparatus used in the prior art. For example, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Examples

The following describes some embodiments of this application more specifically by using examples and comparative examples. Various tests and evaluations are performed according to the following methods. In addition, unless otherwise specified, "part" and "%" are based on mass.

Test method and device

Particle size test of inorganic substance

$D_v 99$ of the inorganic substance was measured by using a particle size analyzer.

Short-circuit deformation rate test

At 25°C, the lithium-ion battery was left standing for 30 minutes, charged to a voltage of 4.7 V at a constant current at a rate of 0.5 (C), then charged to a current of 0.05C at a constant voltage of 4.7 V, and left standing for 60 minutes. A thickness of the lithium-ion battery was measured and denoted as $T_1$. Then, the lithium-ion battery was left standing for 30 minutes at 25°C. A 100 m$\Omega$ current wire was externally connected to the tab (tab), and the battery was subjected to an external short circuit. After 1 hour, a thickness of the lithium-ion battery was measured and denoted as $T_2$. Short-circuit deformation rate = $[(T_2 - T_1)/T_1] \times 100\%$.

Overcharge deformation rate test

At 25°C, the lithium-ion battery was left standing for 30 minutes, charged to a voltage of 4.7 V at a constant current of 0.5C, then charged to a current of 0.05C at a constant voltage of 4.7 V, and left standing for 60 minutes. A thickness of the lithium-ion battery was measured and denoted as $T_3$. Then, the lithium-ion battery was charged at a constant current of 0.1C for 60 minutes, and left standing for 30 minutes. The same steps were repeated for a total of 5 times to make a state of charge (SOC) of the lithium-ion battery reach 150%, and a thickness of the lithium-ion battery was measured and denoted as $T_4$. Overcharge deformation rate = $[(T_4 - T_3)/T_3] \times 100\%$.

**Voltage drop test**

At 25°C, the lithium-ion battery was charged to a voltage of 4.7 V at a constant current of 1C, then charged to a current of 0.05C at a constant voltage of 4.7 V, discharged to a voltage of 3.2 V at a constant current of 1C, and left standing for 5 minutes. A voltage was measured and denoted as the voltage before storage. Then, the lithium-ion battery was stored for 24 hours at -20°C. A voltage was measured again and denoted as the voltage after storage. Voltage drop = voltage before storage - voltage after storage.

**Thermal stability test**

At 25°C, the lithium-ion battery was left standing for 30 minutes to make the lithium-ion battery reach a constant temperature. Initial thickness was measured and denoted as $T_0$. Then, the lithium-ion battery was heated to 130°C at a temperature rise velocity of 5°C/min, held at 130°C for 30 min, and then cooled to room temperature. A thickness of the lithium-ion battery was measured and denoted as $T_5$. Thermal stability deformation rate = $[(T_5 - T_0)/T_0] \times 100\%$.

**Example 1-1**

<Preparation of positive electrode plate>

Positive electrode active material lithium cobalt oxide $LiCoO_2$, conductive agent Super-P, and binder polyvinylidene fluoride (PVDF) were mixed at a mass ratio of 97:1:2, N-methylpyrrolidone (NMP) was added, and the mixture was stirred to uniformity by using a vacuum stirrer, to obtain a positive electrode slurry with a solid content of 70wt%. The positive electrode slurry was uniformly applied onto one surface of positive electrode current collector aluminum foil with a thickness of 12 $\mu$m, and the aluminum foil was dried for 1 h at 120°C to obtain a one-sided positive electrode active material layer with a thickness of 80 $\mu$m. The same steps were repeated on the other surface of the aluminum foil to obtain a positive electrode plate coated with positive electrode active material layers on two surfaces. Then, after cold pressing, cutting, and tab welding, the resulting positive electrode plate was dried in vacuum for 1 h at 120°C to produce a 74 mm (width) $\times$ 854 mm (length) positive electrode plate with a current collector uncoated region at the tail.

Aluminum oxide (with $D_v99$ of 0.7 $\mu$m) and binder PVDF were mixed at a mass ratio of 80:20, N-methylpyrrolidone (NMP) was added, and the mixture was stirred to uniformity by using a vacuum stirrer, to obtain an inorganic coating slurry with a solid content of 30wt%. The inorganic coating slurry was first uniformly applied onto one surface (this surface was defined as surface a, and the other surface of the current collector was defined as surface b) of the positive electrode current collector aluminum foil at the tail of the positive electrode plate, and then dried for 1 h at 120°C to obtain a positive electrode plate with an inorganic coating being provided on one surface, that is, the surface a, of the current collector, where the length of the inorganic coating was 95 mm, and the thickness of the inorganic coating was 2.5 $\mu$m.

<Preparation of negative electrode plate>

Acetylene black, binder styrene-butadiene rubber, and thickener carboxymethyl cellulose were mixed at a mass ratio of 50:45:5, deionized water was added, and the mixture was stirred by using a vacuum stirrer, to obtain a negative electrode primer layer slurry with a solid content of 30wt%. The negative electrode primer layer slurry was uniformly applied onto one surface of negative electrode current collector copper foil with a thickness of 8 $\mu$m, and the copper foil was dried at 120°C to obtain a negative electrode primer layer with a thickness of 1 $\mu$m. Then, the same steps were repeated on the other surface of the copper foil to obtain a negative electrode current collector coated with negative electrode primer layers on two surfaces.

Then, artificial graphite, binder styrene-butadiene rubber (SBR), and binder sodium carboxymethyl cellulose (CMC-Na) were mixed at a mass ratio of 97.4:1.2:1.4, deionized water was added, and the mixture was stirred by using a vacuum stirrer, to obtain a negative electrode slurry with a solid content of 75wt%. The negative electrode slurry was uniformly applied onto one surface of the negative electrode current collector containing the negative electrode primer layer, and the copper foil was dried at 120°C to obtain a one-sided negative electrode active material layer with a thickness of 100 $\mu$m. The same steps were repeated on the other surface of the copper foil to obtain a negative electrode plate coated with negative electrode active material layers on two surfaces. Then, after cold pressing, cutting, and slitting, the resulting negative electrode plate was dried in vacuum for 1 h at 120°C to produce a 76 mm $\times$ 867 mm negative electrode plate.

<Preparation of electrolyte>

In an argon atmosphere glove box with a moisture content less than 10 ppm, ethylene carbonate (EC), propyl propionate (PP), and diethyl carbonate (DEC) were mixed at a mass ratio of 1:1:1 to obtain an organic solvent, and then lithium salt $LiPF_6$ and additive lithium difluorophosphate were added to the organic solvent, to obtain an electrolyte. A mass percentage of $LiPF_6$ was 12.5%, a mass percentage of lithium difluorophosphate was 0.15%, and the remaining was the organic solvent. The mass percentages of the substances were calculated based on the mass of the electrolyte.

<Preparation of separator>

A porous polyethylene film with a thickness of 7 $\mu$m was used.

<Preparation of lithium-ion battery>

The prepared positive electrode plate, separator, and negative electrode plate were stacked in sequence, so that the separator was located between the positive electrode and the negative electrode for separation. Then, the resulting stack was wound to obtain an electrode assembly. The electrode assembly was placed into an aluminum-plastic film packaging bag and dried to remove moisture, and then the electrolyte was injected into the aluminum-plastic film packaging bag, followed by processes such as vacuum packaging, standing, formation, degassing, and trimming, to obtain a lithium-ion battery.

**Example 1-2 to Example 1-16**

Example 1-2 to Example 1-16 were the same as Example 1-1 except that in <preparation of positive electrode plate>, the thickness of the inorganic coating was adjusted according to Table 1 so as to adjust the mass per unit area of the inorganic coating, and that in <preparation of electrolyte>, the type and percentages of the electrolyte additives were adjusted according to Table 1, with the percentage of LiPF$_6$ remaining unchanged and the percentage of the organic solvent changing accordingly.

**Example 2-1 to Example 2-6**

Example 2-1 to Example 2-6 were the same as Example 1-2 except that in <preparation of positive electrode plate>, the length of the inorganic coating was adjusted. The length of the inorganic coating on the surface a is shown in Table 2.

**Example 2-7 to Example 2-8**

Example 2-7 to Example 2-8 were the same as Example 1-2 except that in <preparation of positive electrode plate>, the size of the positive electrode plate was adjusted to 163 mm × 2275 mm, the size of the negative electrode plate was adjusted to 167 mm × 2283 mm, and the length of the inorganic coating was adjusted. The length of the inorganic coating on the surface a is shown in Table 2.

**Example 2-9**

Example 2-9 was the same as Example 1-2 except that in <preparation of positive electrode plate>, the preparation of the inorganic coating was adjusted. The preparation of the inorganic coating was as follows: aluminum oxide (with D$_v$99 of 0.7 $\mu$m) and binder PVDF were mixed at a mass ratio of 80:20, N-methylpyrrolidone (NMP) was added, and the mixture was stirred to uniformity by using a vacuum stirrer, to obtain an inorganic coating slurry with a solid content of 30wt%. The inorganic coating slurry was first uniformly applied onto the surface a of the positive electrode current collector aluminum foil at the tail of the positive electrode plate, and then dried for 1 h at 120°C. Then, the same steps were repeated on the surface b of the positive electrode plate. After drying, a positive electrode plate with inorganic coatings being provided on two surfaces of the current collector was obtained. The lengths of the inorganic coatings on the surface a and the surface b are shown in Table 2.

**Example 2-10**

Example 2-10 was the same as Example 2-9 except that in <preparation of positive electrode plate>, the size of the positive electrode plate was adjusted to 163 mm × 2275 mm, the size of the negative electrode plate was adjusted to 167 mm × 2283 mm, and the lengths of the inorganic coatings on the surface a and the surface b of the positive electrode current collector were adjusted. The lengths of the inorganic coatings on the surface a and the surface b are shown in Table 2.

**Example 2-11 to Example 2-14**

Example 2-11 to Example 2-14 were the same as Example 1-2 except that in <preparation of positive electrode plate>, the thickness of the inorganic coating was adjusted. The thickness of the inorganic coating is shown in Table 2.

**Example 3-1 to Example 3-7**

Example 3-1 to Example 3-7 were the same as Example 1-1 except that in <preparation of positive electrode plate>, the type, percentage, and D$_v$99 of the inorganic substance and the type and percentage of the binder were adjusted according to Table 3.

**Comparative Example 1**

Comparative Example 1 was the same as Example 1-2 except that in <preparation of electrolyte>, the type and percentages of the electrolyte additives were adjusted according to Table 1, with the percentage of LiPF$_6$ remaining unchanged and the percentage of the organic solvent changing accordingly.

**Comparative Example 2**

Comparative Example 2 was the same as Example 1-2 except that in <preparation of positive electrode plate>, the thickness of the inorganic coating was adjusted according to Table 1 so as to adjust the mass per unit area of the inorganic coating, and that in <preparation of electrolyte>, the type and percentages of the electrolyte additives were adjusted according to Table 1, with the percentage of $LiPF_6$ remaining unchanged and the percentage of the organic solvent changing accordingly.

**Table 1**

| | Inorganic coating | | Electrolyte | | | | | | | | B | B/A | Overcharge deformation rate (%) | Short-circuit deformation rate (%) | Voltage drop (V) | Thermal stability deformation rate (%) |
| | A (g/m²) | H (μm) | Mass percentage of lithium difluorophosphate (%) | Mass percentage of succinonitrile (%) | Mass percentage of adiponitrile (%) | Mass percentage of 1,3,6-hexanetricarbonitrile (%) | Mass percentage of 1,2,3-tris(2-oxyethoxy)propane (%) | Mass percentage of $LiPF_6$ (%) | Mass percentage of organic solvent (%) | | | | | | |
|---|---|---|---|---|---|---|---|---|---|---|---|---|---|---|---|
| Example 1-1 | 1.5 | 2.5 | 0.15 | / | / | / | / | 12.5 | 87.35 | 0.15 | 0.10 | 15.6 | 16.7 | 0.58 | 13.8 |
| Example 1-2 | 3.5 | 4.5 | / | / | 3.1 | / | / | 12.5 | 84.4 | 3.1 | 0.89 | 13.2 | 14.6 | 0.4 | 11.8 |
| Example 1-3 | 7.8 | 8.7 | / | / | 0 | 1.7 | / | 12.5 | 85.8 | 1.7 | 0.22 | 14.6 | 15.2 | 0.49 | 12.1 |
| Example 1-4 | 14.7 | 11.1 | / | / | 3.1 | 3.5 | / | 12.5 | 80.9 | 6.6 | 0.45 | 14.9 | 16.4 | 0.56 | 12.8 |
| Example 1-5 | 2.5 | 3.8 | 0.1 | / | 0 | 1.9 | / | 12.5 | 85.5 | 2 | 0.80 | 11.2 | 13.8 | 0.36 | 10.5 |
| Example 1-6 | 2.2 | 3.2 | 0.02 | / | 2.3 | 0 | 0.025 | 12.5 | 85.155 | 2.345 | 1.07 | 12.2 | 14.9 | 0.38 | 10.3 |
| Example 1-7 | 2.4 | 3.6 | 0.1 | / | 3.8 | 2.9 | 0.55 | 12.5 | 80.15 | 7.35 | 3.06 | 10.6 | 12.7 | 0.32 | 10.1 |
| Example 1-8 | 2.3 | 3.4 | 0.25 | / | 1.3 | 2.4 | 0.25 | 12.5 | 83.3 | 4.2 | 1.83 | 10.4 | 12.2 | 0.24 | 9.9 |
| Example 1-9 | 2.1 | 3.1 | 0.5 | 2.7 | 1.2 | 0.8 | 0.5 | 12.5 | 81.8 | 5.7 | 2.71 | 10.8 | 12.8 | 0.25 | 9.1 |
| Example 1-10 | 2.2 | 3.2 | 0.03 | / | 2.8 | 1.6 | / | 12.5 | 83.07 | 4.43 | 2.01 | 11 | 12.3 | 0.27 | 10.3 |
| Example 1-11 | 19.7 | 16.8 | 0.04 | / | 3.0 | 0 | / | 12.5 | 84.46 | 3.04 | 0.15 | 17.2 | 18.4 | 0.76 | 14.1 |
| Example 1-12 | 2.1 | 3.1 | 0.05 | / | 2.6 | 1.5 | / | 12.5 | 83.35 | 4.15 | 1.98 | 13.1 | 15.8 | 0.58 | 13.2 |
| Example 1-13 | 4.5 | 5.5 | 0.03 | / | 1.5 | 3.1 | / | 12.5 | 82.87 | 4.63 | 1.03 | 13.9 | 16.0 | 0.6 | 12.9 |
| Example 1-14 | 5.7 | 6.6 | 0.03 | / | 2.8 | 2.3 | 0.25 | 12.5 | 82.12 | 5.38 | 0.94 | 13.0 | 15.4 | 0.5 | 12.3 |
| Example 1-15 | 1.2 | 3.8 | 0.03 | / | 3.0 | 2.8 | / | 12.5 | 81.67 | 5.83 | 4.86 | 16.5 | 17.9 | 0.71 | 15.1 |

| | Inorganic coating | | Electrolyte | | | | | | | | | | Overcharge deformation rate (%) | Short-circuit deformation rate (%) | Voltage drop (V) | Thermal stability deformation rate (%) |
|---|---|---|---|---|---|---|---|---|---|---|---|---|---|---|---|---|
| | A (g/m²) | H (μm) | Mass percentage of lithium difluorophosphate (%) | Mass percentage of succinonitrile (%) | Mass percentage of adiponitrile (%) | Mass percentage of 1,3,6-hexanetricarbonitrile (%) | Mass percentage of 1,2,3-tris(2-oxyethoxy)propane (%) | Mass percentage of LiPF₆ (%) | Mass percentage of organic solvent (%) | B | B/A | | | | | |
| Example 1-16 | 15.5 | 12.2 | 0.04 | 0.5 | / | / | / | 12.5 | 86.96 | 0.54 | 0.03 | 17.6 | 17.2 | 0.78 | 14.8 |
| Comparative Example 1 | 3.5 | 4.5 | / | / | / | / | / | 12.5 | 87.50 | / | / | 19.2 | 20.1 | 0.90 | 17.6 |
| Comparative Example 2 | 1.8 | 2.7 | / | 2.5 | 3.3 | 3.2 | 0.25 | 12.5 | 78.25 | 9.25 | 5.14 | 18.3 | 19.0 | 0.83 | 16.5 |

Note: "/" in Table 1 means that a corresponding parameter or substance does not exist.

It can be learned from Example 1-1 to Example 1-16 and Comparative Example 1 and Comparative Example 2 that with use of the positive electrode plate structure of this application, selection of the electrolyte additives within the ranges in this application, and cooperative control of B/A within the range in this application, the lithium-ion battery obtained has significantly decreased overcharge deformation rate, short-circuit deformation rate, voltage drop, and thermal stability deformation rate, which indicates that the lithium-ion battery of this application has excellent high-temperature safety performance at high voltage.

## Table 2

| | W (mm) | | Percentage of length of inorganic coating in total length of positive electrode plate | H (μm) | Length of positive electrode plate | Overcharge deformation rate (%) | Short-circuit deformation rate (%) | Voltage drop (V) | Thermal stability deformation rate (%) |
|---|---|---|---|---|---|---|---|---|---|
| | Surface a | Surface b | | | | | | | |
| Example 1-2 | 95 | / | 11.1% | 4.5 | 854 mm | 13.2 | 14.6 | 0.40 | 11.8 |
| Example 2-1 | 43 | / | 5.0% | 4.5 | 854 mm | 14.6 | 15.7 | 0.52 | 12.2 |
| Example 2-2 | 4 | / | 0.5% | 4.5 | 854 mm | 18.0 | 18.5 | 0.79 | 16.2 |
| Example 2-3 | 10 | / | 1.2% | 4.5 | 854 mm | 16.7 | 17.3 | 0.70 | 15.3 |
| Example 2-4 | 72 | / | 8.4% | 4.5 | 854 mm | 14.3 | 15.1 | 0.48 | 12.4 |
| Example 2-5 | 117 | / | 13.7% | 4.5 | 854 mm | 12.9 | 13.8 | 0.38 | 11.5 |
| Example 2-6 | 169 | / | 19.8% | 4.5 | 854 mm | 12.6 | 14.2 | 0.44 | 11.9 |

| | W (mm) | | Percentage of length of inorganic coating in total length of positive electrode plate | H (μm) | Length of positive electrode plate | Overcharge deformation rate (%) | Short-circuit deformation rate (%) | Voltage drop (V) | Thermal stability deformation rate (%) |
|---|---|---|---|---|---|---|---|---|---|
| | Surface a | Surface b | | | | | | | |
| Example 2-7 | 217 | / | 9.5% | 4.5 | 2275 mm | 12.8 | 14.1 | 0.45 | 12.5 |
| Example 2-8 | 246 | / | 10.8% | 4.5 | 2275 mm | 13.4 | 14.3 | 0.46 | 12.8 |
| Example 2-9 | 102 | 15 | 11.9% on surface a 1.8% on surface b | 4.5 | 854 mm | 11.1 | 12.0 | 0.31 | 10.1 |
| Example 2-10 | 198 | 30 | 8.7% on surface a 1.3% on surface b | 4.5 | 2275 mm | 11.6 | 12.4 | 0.34 | 10.4 |
| Example 2-11 | 95 | / | 11.1% | 3.0 | 854 mm | 13.1 | 14.4 | 0.42 | 11.4 |
| Example 2-12 | 95 | / | 11.1% | 7.0 | 854 mm | 13.3 | 14.3 | 0.41 | 11.5 |
| Example 2-13 | 95 | / | 11.1% | 14.0 | 854 mm | 14.0 | 15.2 | 0.47 | 12.7 |
| Example 2-14 | 95 | / | 11.1% | 20 | 854 mm | 16.2 | 16.9 | 0.69 | 14.8 |

Note: When the inorganic coating is provided on two surfaces of the current collector, the length of the inorganic coating on the surface a is W2 mm, and the length of the inorganic coating on the surface b is W1 mm; and when the inorganic coating is provided on one surface of the current collector, the length of the inorganic coating is W mm.

It can be learned from Example 2-1 to Example 2-10 that with the length of the inorganic coating along the length direction of the positive electrode plate controlled within the range in this application, the lithium-ion battery obtained has low overcharge deformation rate, short-circuit deformation rate, voltage drop, and thermal stability deformation rate, which indicates that the lithium-ion battery has good high-temperature safety performance at high voltage. It can be learned from Example 1-2 and Example 2-11 to Example 2-14 that with the thickness of the inorganic coating controlled within the range in this application, the lithium-ion battery has both good high-temperature safety performance and high energy density at high voltage.

**Table 3**

| | Inorganic substance | | | Binder | | Overcharge deformation rate (%) | Short-circuit deformation rate (%) | Voltage drop (V) | Thermal stability deformation rate (%) |
|---|---|---|---|---|---|---|---|---|---|
| | Type | $D_v99$ (µm) | Percentage (%) | Type | Percentage (%) | | | | |
| Example 1-1 | Aluminum oxide | 0.7 | 80 | Polyvinylidene fluoride | 20 | 15.6 | 16.7 | 0.58 | 13.8 |
| Example 3-1 | Aluminum oxide | 0.7 | 75 | Polyvinylidene fluoride | 25 | 14.7 | 16.2 | 0.53 | 13.1 |
| Example 3-2 | Aluminum oxide | 0.7 | 70 | Polyvinylidene fluoride | 30 | 14.3 | 15.4 | 0.48 | 12.6 |
| Example 3-3 | Aluminum oxide | 1.1 | 80 | Polyvinylidene fluoride | 20 | 15.3 | 16.4 | 0.54 | 13.5 |
| Example 3-4 | Aluminum oxide | 1.6 | 80 | Polyvinylidene fluoride | 20 | 15.8 | 16.9 | 0.6 | 13.9 |
| Example 3-5 | Aluminum oxide | 0.6 | 80 | Polypropylene | 20 | 15.1 | 16 | 0.38 | 13.6 |
| Example 3-6 | Aluminum oxide | 0.6 | 80 | Polyacrylate | 20 | 15.0 | 15.8 | 0.48 | 13.4 |

| | Inorganic substance | | | Binder | | Overcharge deformation rate (%) | Short-circuit deformation rate (%) | Voltage drop (V) | Thermal stability deformation rate (%) |
|---|---|---|---|---|---|---|---|---|---|
| | Type | $D_v99$ (μm) | Percentage (%) | Type | Percentage (%) | | | | |
| Example 3-7 | Boehmite | 0.7 | 80 | Polyvinylidene fluoride | 20 | 13.8 | 14.2 | 0.45 | 11.6 |

The types and percentages of the inorganic substance and the binder generally affect the high-temperature safety performance of the lithium-ion battery at high voltage. It can be learned from Example 3-1 to Example 3-7 that with the foregoing parameters controlled within the ranges in this application, the lithium-ion battery has low overcharge deformation rate, short-circuit deformation rate, voltage drop, and thermal stability deformation rate, so that the lithium-ion battery has good high-temperature safety performance at high voltage.

All embodiments in this specification are described in a related manner. For a part that is the same or similar between these embodiments, reference may be made between these embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising a positive electrode plate, a negative electrode plate, a separator, and an electrolyte; wherein the positive electrode plate comprises a positive electrode current collector, and a positive electrode active material layer and an inorganic coating are provided on a surface of the positive electrode current collector; and

   the electrolyte comprises an additive; wherein the additive comprises at least one of lithium difluorophosphate, succinonitrile, adiponitrile, 1,3,6-hexanetricarbonitrile, or 1,2,3-tris(2-oxyethoxy)propane; and
   a mass per unit area of the inorganic coating is A g/m$^2$, and based on a mass of the electrolyte, a mass percentage of the additive is B%, satisfying $0.01 \leq B/A \leq 5$.

2. The secondary battery according to claim 1, wherein $1 \leq A \leq 20$.

3. The secondary battery according to claim 1 or 2, wherein $0.01 \leq B \leq 10$.

4. The secondary battery according to any one of claims 1 to 3, wherein along a thickness direction of the positive electrode plate, a thickness of the inorganic coating is H μm, wherein $1 \leq H \leq 20$.

5. The secondary battery according to any one of claims 1 to 4, wherein along a length direction of the positive electrode plate, a percentage of a length of the inorganic coating in a total length of the positive electrode plate is 0.1% to 20%.

6. The secondary battery according to any one of claims 1 to 5, wherein the inorganic coating is disposed on at least one surface of the current collector; and along a length direction of the positive electrode plate, a length of the inorganic coating is W mm, wherein $5 \leq W \leq 300$.

7. The secondary battery according to any one of claims 1 to 6, wherein the inorganic coating is disposed on two surfaces of the current collector, a length of the inorganic coating on one surface of the current collector being W1 mm, and a length of the inorganic coating on the other surface of the current collector being W2 mm, wherein $5 \leq W1 \leq 35$ and $30 \leq W2 \leq 300$.

8. The secondary battery according to any one of claims 1 to 7, wherein the inorganic coating comprises an inorganic substance and a binder; wherein based on a mass of the inorganic coating, a mass percentage of the inorganic substance is 70% to 80% and a mass percentage of the binder is 20% to 30%; the inorganic substance comprises at least one of aluminum oxide, magnesium oxide, calcium oxide, magnesium hydroxide, boehmite, or zirconium oxide; the binder comprises at least one of polyvinylidene fluoride, polypropylene, or polyacrylate; and $D_v99$ of the inorganic substance is 0.5 $\mu$m to 2 $\mu$m.

9. The secondary battery according to any one of claims 1 to 8, wherein the secondary battery satisfies at least one of the following conditions:

   (1) along a length direction of the positive electrode plate, a length of the inorganic coating is W mm, wherein $40 \leq W \leq 160$;
   (2) along a thickness direction of the positive electrode plate, a thickness of the inorganic coating is H $\mu$m, wherein $3 \leq H \leq 14$;
   (3)

   $$2 \leq A \leq 14;$$

   (4)

   $$0.02 \leq B \leq 7.5;$$

   or
   (5)

   $$0.2 \leq B/A \leq 3.$$

10. An electric apparatus, comprising the secondary battery according to any one of claims 1 to 9.

## INTERNATIONAL SEARCH REPORT

| | International application No. |
|---|---|
| | **PCT/CN2023/123493** |

| A. | CLASSIFICATION OF SUBJECT MATTER |
|---|---|

H01M10/42(2006.01)i; H01M10/0525(2010.01)i; H01M10/0567(2010.01)i

According to International Patent Classification (IPC) or to both national classification and IPC

| B. | FIELDS SEARCHED |
|---|---|

Minimum documentation searched (classification system followed by classification symbols)

    IPC:H01M

Documentation searched other than minimum documentation to the extent that such documents are included in the fields searched

Electronic data base consulted during the international search (name of data base and, where practicable, search terms used)

    CNABS; CNTXT; DWPI; VEN; ENTXT; CNKI: 电池, 正极, 集流体, 涂层, 绝缘层, 无机材料, 氧化铝, 电解液, 添加剂, battery, positive electrode, collector, coating, insulating layer, inorganic material, aluminium oxide, electrolyte, additive

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116404275 A (NINGDE AMPEREX TECHNOLOGY LTD.) 07 July 2023 (2023-07-07) description, paragraphs 4-49 | 1-10 |
| X | CN 112864546 A (TOYOTA MOTOR CORP.) 28 May 2021 (2021-05-28) description, paragraphs 2 and 22-67, and figures 1-6 | 1-10 |
| X | CN 115053369 A (NINGDE AMPEREX TECHNOLOGY LTD.) 13 September 2022 (2022-09-13) description, paragraphs 28-148 | 1-10 |
| A | CN 114583100 A (HUIZHOU LIWINON NEW ENERGY TECHNOLOGY CO., LTD.) 03 June 2022 (2022-06-03) entire document | 1-10 |
| A | KR 20230012439 A (LG ENERGY SOLUTION LTD.) 26 January 2023 (2023-01-26) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 January 2024** | **19 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br><br>**PCT/CN2023/123493**</td></tr>
</table>

| Patent document cited in search report | | | Publication date (day/month/year) | Patent family member(s) | | | Publication date (day/month/year) |
|---|---|---|---|---|---|---|---|
| CN | 116404275 | A | 07 July 2023 | None | | | |
| CN | 112864546 | A | 28 May 2021 | JP | 2021086681 | A | 03 June 2021 |
| | | | | JP | 7253147 | B2 | 06 April 2023 |
| | | | | US | 2023395807 | A1 | 07 December 2023 |
| | | | | US | 2021159505 | A1 | 27 May 2021 |
| | | | | US | 11777101 | B2 | 03 October 2023 |
| | | | | KR | 20210065033 | A | 03 June 2021 |
| | | | | KR | 102506723 | B1 | 06 March 2023 |
| | | | | DE | 102020130701 | A1 | 27 May 2021 |
| | | | | CN | 112864546 | B | 14 April 2023 |
| CN | 115053369 | A | 13 September 2022 | WO | 2023123028 | A1 | 06 July 2023 |
| CN | 114583100 | A | 03 June 2022 | None | | | |
| KR | 20230012439 | A | 26 January 2023 | EP | 4261914 | A1 | 18 October 2023 |
| | | | | WO | 2023287240 | A1 | 19 January 2023 |

Form PCT/ISA/210 (patent family annex) (July 2022)

**EP 4 693 589 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310340241X